# EUROPÄISCHE PATENTSCHRIFT

(11) **EP 4 071 393 B1**
(45) Veröffentlichungstag und Bekanntmachung des Hinweises auf die Patenterteilung: **29.11.2023**
(21) Anmeldenummer: 22161515.6
(22) Anmeldetag: 11.03.2022
(51) Int. Cl.: F16L 11/20, F16L 11/15, F16L 11/12

(54) **LEITUNGSANORDNUNG**
DUCT ASSEMBLY
AGENCEMENT DE CONDUITE

(30) Priorität: 12.03.2021 DE 102021106055; 12.03.2021 DE 202021101261 U
(43) Veröffentlichungstag der Anmeldung: 12.10.2022
(73) Patentinhaber: UNIWELL Rohrsysteme GmbH & Co. KG, 96106 Ebern (DE)
(72) Erfinder: Mai, Oliver, 96164 Kemmern (DE)
(74) Vertreter: Von Rohr Patentanwälte Partnerschaft mbB

(56) Entgegenhaltungen:
- GB-A- 784 698
- US-A- 5 829 483

## Beschreibung

Die vorliegende Erfindung betrifft eine Leitungsanordnung mit einer inneren Fluidleitung und mit einer äußeren Fluidleitung, insbesondere einem inneren Wellrohr oder Wellenschlauch und einem äußeren Wellrohr oder Wellschlauch, wobei wenigstens eine Fluidleitung ein Wellenprofil mit Wellenbergen und Wellentälern aufweist.

Leitungsanordnungen der oben genannten Art werden zur Leitung von fließfähigen Medien, insbesondere Flüssigkeiten, eingesetzt bzw. verwendet. Insbesondere werden in Rede stehende Leitungsanordnungen als medienführende Systeme in der Automobilindustrie und/oder im Maschinen- bzw. Anlagenbau verwendet. Dabei dienen derartige Leitungsanordnungen dann vorzugsweise zur Zu- und/oder Ableitung von Kraftstoff, (Prozess-)Luft, Hydraulikflüssigkeit, Bremsflüssigkeit und/oder von Reinigungsflüssigkeit, beispielsweise zur Scheiben- und/oder Scheinwerferreinigung.

Werden Leitungsanordnungen in den oben skizzierten Industriezweigen eingesetzt, ist dies zwangsläufig mit begrenztem Bauraum verbunden. Überdies müssen Leitungsanordnungen der eingangs genannten Art oftmals entlang eines komplexen Leitungsverlaufs verlegt und dabei vielmals gebogen werden, einhergehend mit nicht unerheblichen mechanischen Beanspruchungen.

Aus der Praxis ist in diesem Zusammenhang bekannt, Fluidleitungen einzusetzen, die ein Wellenprofil aufweisen. Das Wellenprofil wird dabei aus Wellenbergen und Wellentälern gebildet. Dadurch wird gegenüber starren bzw. glatten Fluidleitungen eine erhöhte Biegsamkeit unter gleichzeitiger Ausbildung eines gewissen Knickschutzes realisiert. So geht aus der DE 10 2015 002 791 A1 eine als Wellschlauch ausgebildete Leitungsanordnung hervor. Diese Leitungsanordnung weist einen Innenschlauch zur Führung eines Fluidstroms sowie einen den Innenschlauch umgebenden Mantel auf. Der Mantel weist ein Wellenprofil mit Wellenbergen und Wellentälern auf, wohingegen der Innenschlauch innenseitig zumindest im Wesentlichen glatt bzw. wellenfrei ausgebildet ist.

Sofern eine Fluidleitung oder beide Fluidleitungen ein Wellenprofil aufweisen, können die in den Ringraum bzw. Zwischenraum zwischen den Fluidleitungen ragenden Wellenberge Hindernisse für ein im Falle einer Beschädigung der inneren Fluidleitung, wie einem Bruch, in den Ringraum eintretendes (Leckage-)Fluid bilden und das axiale Abfließen des (Leckage-)Fluids im Zwischenraum behindern, insbesondere dann, wenn es zu einem Abknicken oder Abbiegen oder einer Stauchung der Leitungsanordnung gekommen ist.

Dies ist insbesondere dann problematisch, wenn die Leckagedetektion über im Zwischenraum angeordnete Sensorelemente erfolgt. Tritt an der inneren Fluidleitung ein Leck auf, kann auf diese Weise das in den Zwischenraum eintretende Leckagefluid über die Sensorelemente detektiert werden. Aus Kosten- und Fertigungsgründen sind die Sensoren dabei jedoch üblicherweise nicht durchgehend über die gesamte Länge der Leitungsanordnung, sondern nur abschnittsweise im Ringraum vorgesehen. Zur Sicherstellung einer zuverlässigen und schnellen Leckagedetektion ist ein im Wesentlichen ungehindertes Abströmen des Leckagefluids in Axialrichtung wünschenswert. Eine Verformung der inneren Fluidleitung und der äußeren Fluidleitung relativ zueinander kann aber dazu führen, dass die Leitungen insbesondere im Bereich der in den Zwischenraum hineinragende Wellenberge gegeneinander zur Anlage kommen, so dass das Abfließen des Leckagefluids behindert wird. Dies kann im Extremfall dazu führen, dass das Leckagefluid nicht mehr abfließt und somit auch nicht mehr detektiert werden kann. Das Leckagefluid staut sich dann im Ringraum auf. Jedenfalls ist ein erheblich verzögertes Abfließen der Leckageflüssigkeit aufgrund der als Strömungsbarriere wirkenden Wellenberge unvermeidlich. Eine zuverlässige und/oder schnelle Leckagedetektion werden dadurch erschwert oder gar unmöglich gemacht.

GB 784 698 A D1 offenbart eine Leitungsanordnung, wobei zur Sicherstellung eines Fluiddurchflusses zwischen einer inneren Fluidleitung und einer äußeren Fluidleitung, die innere Fluidleitung und die äußere Fluidleitung jeweils ein spiralförmiges Wellenprofil aufweisen, wobei diese Wellenprofile in der Gegenrichtung zueinander verlaufen.

Der vorliegenden Erfindung liegt die Aufgabe zugrunde, eine Leitungsanordnung der eingangs genannten Art zur Verfügung zu stellen, die eine zuverlässige Leckagedetektion ermöglicht. Insbesondere sollen ein ausreichender Abfluss eines Leckagestroms über einen Ringraum zwischen der inneren Fluidleitung und der äußeren Fluidleitung auch bei einem Abknicken, Abbiegen und/oder bei einer Stauchung der Leitungsanordnung und damit die Möglichkeit zu dessen Detektion in einfacher Weise und zuverlässig sichergestellt sein.

Die vorgenannte Aufgabe wird durch eine Leitungsanordnung mit den Merkmalen von Anspruch 1 gelöst. Vorteilhafte Weiterbildungen sind Gegenstand der Unteransprüche.

Zur Sicherstellung eines Durchflusses zwischen innerer Fluidleitung und äußerer Fluidleitung weist erfindungsgemäß wenigstens ein Wellenberg einen Bereich mit verringerter Wellenhöhe auf. Mit anderen Worten dient der erfindungsgemäße Bereich mit verringerter Wellenhöhe zur Sicherstellung und/oder Begünstigung einer fluidischen Verbindung zwischen der inneren Fluidleitung und der äußeren Fluidleitung in axialer Richtung der Leitungsanordnung, insbesondere, wenn diese abgebogen, abgeknickt und/oder gestaucht wird.

Die verringerte Wellenhöhe erleichtert den axialen Abfluss eines in den Zwischenraum eintretenden Fluids, bei dem es sich vorzugsweise um ein Leckagefluid, insbesondere eine Leckageflüssigkeit, handelt. Während bei den aus dem Stand der Technik bekannten Leitungsanordnungen das in den Zwischenraum eintretende Fluid durch die Wellenberge abgebremst und, im Extremfall, aufgestaut wird, wird erfindungsgemäß ein Abfließen durch einen Bereich mit verringerter Wellenhöhe des Wellenbergs am Wellenberg vorbei sichergestellt. Dadurch reduziert sich letztlich der zum Abfließen notwendige Fluiddruck, sodass bei einer Leckage eine Strömung des Leckagefluids entlang des Zwischenraums stets gewährleistet ist, auch dann, wenn die Leckage vergleichsweise gering ausgeprägt und/ der Fluiddruck des Leckagefluids vergleichsweise gering ist. Durch die Sicherstellung der Strömung des Leckagefluids in axialer Richtung lässt sich in einfacher Weise eine zuverlässige und/oder reaktionsschnelle Leckagedetektion realisieren, insbesondere wenn zur Leckagedetektion lediglich vereinzelt im Ringraum zwischen der inneren Fluidleitung und der äußeren Fluidleitung angeordnete und axial beabstandete Sensorelemente vorgesehen sind.

Mit anderen Worten wird im Rahmen der vorliegenden Erfindung somit die Ausbildung eines Leckagekanals zwischen der inneren und äußeren Fluidleitung sichergestellt, wobei durch Bereiche mit verringerter Wellenhöhe das Abfließen von Leckagefluid auch dann erfolgen kann, wenn die Leitungsanordnung abgebogen und/oder abgeknickt und/oder zusammengedrückt wird.

Bei der Ausbildung wenigstens eines Wellenberges mit verringerter Wellenhöhe ist vorzugsweise ein geändertes Wellenprofil derart vorgesehen, dass die mechanische Stabilität der Fluidleitung nicht beeinträchtigt wird. Insbesondere führt die Verringerung der Wellenhöhe nicht zu einer Durchbrechung der Fluidleitung in radialer Richtung, so dass die Fluidleitung weiterhin fluiddicht ist.

Der Bereich mit verringerter Wellenhöhe kann auf unterschiedliche Art realisiert werden.

So sieht eine Möglichkeit vor, den Bereich mit verringerter Wellenhöhe als Profilabsenkung auszubilden. Dabei ist im Bereich einer Profilabsenkung die Höhe des Wellenbergs geringer ist als in den Bereichen des Wellenberges angrenzend an die Profilabsenkung. Gleichzeitig ist der Wellenberg jedoch auch im Bereich der Profilabsenkung gegenüber angrenzenden Wellentälern radial erhöht. Dementsprechend ist bei einer Profilabsenkung im Sinne der Erfindung zwar eine Reduzierung der Höhe des Wellenbergs vorgesehen, der Wellenberg ist jedoch nach wie vor vorhanden.

Alternativ kann der Bereich mit verringerter Wellenhöhe auch als Profilunterbrechung ausgebildet sein. Die Wellenhöhe des Wellenbergs ist im Bereich der Profilunterbrechung vorzugsweise auf Null verringert. Unter Ausbildung einer Profilunterbrechung im Sinne der Erfindung erstreckt sich der Wellenberg auf einer Außenseite der inneren Fluidleitung und/oder auf einer Innenseite der äußeren Fluidleitung dann lediglich abschnittsweise, also nicht umlaufend, über den Umfang der Fluidleitung. Im Bereich der Profilunterbrechung werden axial angrenzende Wellentäler miteinander verbunden, vorzugsweise auf gleichem Talniveau.

Insbesondere ist das Wellenprofil im Bereich einer Profilabsenkung und/oder einer Profilunterbrechung geschlossen ausgebildet. Die Dichtheit der Leitungsanordnung ist damit auch im Bereich einer Profilunterbrechung und/oder Profilabsenkung gewährleistet.

Generell ist unter dem Begriff "Wellenprofil" im Rahmen der vorliegenden Erfindung vorzugsweise ein rohr- bzw. schlauchförmiger Bereich zu verstehen, dessen Geometrie sich von einer einfachen Zylinderform durch das Vorhandensein mindestens einer Vertiefung, also einem Wellental, und einer Erhöhung, also einem Wellenberg, unterscheidet.

Weist eine innere Fluidleitung der erfindungsgemäßen Leitungsanordnung ein Wellenprofil auf, ist unter einem Wellenberg eine radial nach außen gerichtete Erhöhung zu verstehen, wobei das Wellental dann dementsprechend durch eine radial nach innen gerichtete Vertiefung ausgebildet wird.

Sofern hingegen eine äußere Fluidleitung der Leitungsanordnung ein Wellenprofil aufweist, ist unter dem Wellenberg eine radial nach innen gerichtete Erhöhung zu verstehen, wobei das Wellental dann dementsprechend durch eine radial nach außen gerichtete Vertiefung ausgebildet wird.

Es ist bevorzugt, wenn die innere Fluidleitung und/oder die äußere Fluidleitung als Wellrohr oder Wellschlauch ausgebildet ist bzw. sind. Dabei ist unter einem Wellrohr vorzugsweise ein länglicher Hohlkörper zu verstehen, der aus einem vergleichsweise starren Material gefertigt ist und einen wellenförmig wechselnden Durchmesser aufweist. Demgegenüber besteht ein Wellschlauch aus einem elastisch verformbaren Material, wobei durch das Wellenprofil die Verformbarkeit erhöht wird.

Das Wellenprofil, d.h. Wellenberge und Wellentäler, einer inneren Fluidleitung und/oder einer äußeren Fluidleitung der erfindungsgemäßen Leitungsanordnung kann vorzugsweise orthogonal zur Längsachse der Fluidleitung in Umfangsrichtung der Fluidleitung verlaufen.

Im Fall einer Profilabsenkung kann ein in Umfangsrichtung im Wesentlichen geschlossener Wellenberg mit unterschiedlichen Berghöhen bzw. radialen Erstreckungen des Wellenprofils vorgesehen sein. Es können auch mehrere Profilabsenkungen bei einem Wellenberg vorgesehen sein, die in Umfangsrichtung nachfolgend und voneinander beabstandet sind.

Im Falle einer Profilunterbrechung kann wenigstens ein Wellenberg durch die Profilunterbrechung geteilt werden, wobei die Profilunterbrechung in beiden Umfangsrichtungen jeweils an eine Wellenflanke angrenzt. Es können auch mehrere Profilunterbrechungen vorgesehen sein, so dass mehrere in Umfangsrichtung nachfolgende bergartige Profilabschnitte vorgesehen sind, die voneinander durch jeweils eine Profilunterbrechung voneinander getrennt und beabstandet sind.

Nicht ausgeschlossen ist, dass sich Wellentäler und Wellenberge auch spiral- bzw. schraubenlinienförmig über den Umfang einer Fluidleitung erstrecken.

Wenigstens ein Wellenberg des Wellenprofils weist einen Bereich mit verringerter Wellenhöhe auf. Vorzugsweise weist jeder in axialer Richtung nachfolgende Wellenberg des Wellenprofils wenigstens eine Profilabsenkung und/oder eine Profilunterbrechung auf. Grundsätzlich ist es aber auch möglich, dass nur einige Wellenberge des Wellenprofils eine Profilabsenkung und/oder eine Profilunterbrechung aufweisen, und andere Wellenberge eine gleiche Wellenhöhe über die gesamte Erstreckung in Umfangsrichtung des Wellenprofils.

Wellenberge mit verringerter Wellenhöhe und Wellenberge mit gleichbleibender Wellenhöhe können sich in Längsrichtung des Wellenprofils beispielsweise abwechseln. Auch kann beispielsweise vorgesehen sein, dass jeder zweite, dritte oder n-te Wellenberg zumindest abschnittsweise eine verringerte Wellenhöhe aufweist.

Das Wellenprofil kann im Längsschnitt der Leitungsanordnung bzw. der Fluidleitung beliebige Längsschnittgeometrien aufweisen, beispielsweise eine sinus-, rechteck-, dreieck-, trapez- oder sägezahnförmige Konturlinie und/oder deren Kombinationen. Beispielsweise können Wellenberge im Längsschnitt des Wellenprofils jeweils gebildet werden durch zwei schräg oder gebogen oder orthogonal zur Längsachse der Fluidleitung angeordnete Wellenflanken und eine radial außenliegende Plateaufläche, wobei die Plateaufläche eben oder gewölbt ausgebildet sein kann und die Wellenflanken miteinander verbindet. Die Wellenflanken grenzen in axialer Richtung jeweils an eine ebene oder gewölbte Talfläche an, die das Wellental bildet.

Besonders bevorzugt liegen in axialer Richtung nachfolgende Bereiche mit verringerter Wellenhöhe des Wellenprofils auf einer gleichen axialen Linie und/oder sind in axialer Richtung ausgefluchtet. Durch diese axial ausgefluchtete Anordnung nachfolgender Profilabsenkungen und/oder Profilunterbrechungen wird ein axialer Strömungskanal gebildet, so dass ein barrierefreier Ablauf von Leckageströmen in axialer Richtung der Leitungsanordnung sichergestellt ist.

Gemäß einer bevorzugten Ausführungsform der vorliegenden Erfindung kann vorgesehen sein, dass wenigstens ein Wellenberg, vorzugsweise mehrere Wellenberge, weiter vorzugsweise jeder Wellenberg, der inneren Fluidleitung und/oder der äußeren Fluidleitung jeweils eine Mehrzahl von Bereichen mit verringerter Wellenhöhe aufweist. Insbesondere können Bereiche mit verringerter Wellenhöhe in Umfangsrichtung voneinander gleichweit beabstandet sein.

Gemäß einer besonders bevorzugten Ausführungsform der vorliegenden Erfindung ist vorgesehen, dass in axialer Richtung nachfolgende Wellenberge jeweils wenigstens einen Bereich mit verringerter Wellenhöhe aufweisen und dass die Bereiche mit verringerter Wellenhöhe in Umfangsrichtung bzw. in Drehrichtung um die Längsachse der Fluidleitung versetzt zueinander angeordnet sind, vorzugsweise um 30° bis 120°, weiter vorzugsweise um 80° bis 100°, besonders bevorzugt um 90°.

Es ist weiter bevorzugt, dass bezogen auf die Querschnittsansicht des Wellenprofils bzw. eines Wellenbergs an eine Profilabsenkung und/oder Profilunterbrechung angrenzende Wellenflanken schräg aufeinander zulaufend angeordnet sind. Bezogen auf die Querschnittsansicht kann bei der inneren Fluidleitung der gegenseitige Abstand der Wellenflanken radial nach innen abnehmen und/oder bei der äußeren Fluidleitung kann der Abstand radial nach außen abnehmen. Dementsprechend können, im Querschnittsprofil, die Flanken V-förmig und/oder spitz zulaufend ausgebildet sein. Alternativ kann jedoch auch eine im Querschnittsprofil rechteckförmige Ausbildung der Bereiche mit verringerter Wellenhöhe vorgesehen sein.

Die innere Fluidleitung und/oder die äußere Fluidleitung können durch Extrusion erhältlich bzw. hergestellt sein. So kann ein vorschlagsgemäßes Verfahren zur Herstellung der erfindungsgemäßen Leitungsanordnung vorsehen, die innere Fluidleitung sowie die äußere Fluidleitung zu extrudieren. Ein derartiges Verfahren zeichnet sich durch eine kostengünstige Umsetzung aus und eignet sich insbesondere zur Herstellung langer, flexibler Leitungsanordnungen auf besonders wirtschaftliche Art und Weise.

Es ist anzumerken, dass die Wellenberge der inneren Fluidleitung und die Wellenberge der äußeren Fluidleitung in der Leitungsanordnung vorzugsweise radial gegenüberliegend bzw. aufeinander zu weisend angeordnet sind. Dementsprechend können radial nach innen gerichtete Wellenberge der äußeren Fluidleitung gegenüberliegend zu den radial nach außen gerichteten Wellenberge der inneren Fluidleitung angeordnet sein.

Um eine platzsparende Anordnung zu ermöglichen, kann der minimale Abstand zwischen der äußeren Fluidleitung und der inneren Fluidleitung, d.h. der eingangs definierte Ringraum zwischen den Leitungen, klein sein und, vorzugsweise, weniger als 5 mm, vorzugsweise weniger als 4 mm, weiter vorzugsweise weniger als 3 mm, besonders bevorzugt weniger als 2 mm oder auch weniger als 1 mm, betragen. Insbesondere ist vorgesehen, dass der maximale Außendurchmesser der inneren Fluidleitung, der im Bereich der Plateauflächen der Wellenberge und/oder der Bergspitzen erreicht wird, weniger als 3 mm, vorzugsweise weniger als 2 mm, weiter vorzugsweise weniger als 1 mm, kleiner ist als der minimale Innendurchmesser der äußeren Fluidleitung, der wiederum vorzugsweise im Bereich der Plateauflächen von Wellenbergen und/oder den Bergspitzen des Wellenprofils der äußeren Fluidleitung erreicht wird. Vorzugsweise beziehen sich diese Durchmesserangaben bzw. Differenzen auf einen nicht geknickten bzw. nicht gestauchten Zustand der erfindungsgemäßen Leitungsanordnung. Insbesondere in einem belasteten Zustand, beispielsweise bei einer Knickbelastung, kann es jedoch auch zu einem bereichsweisen Kontakt zwischen der inneren und äußeren Fluidleitung kommen, insbesondere im Bereich von Wellenbergen eines Wellenprofils der inneren Fluidleitung und/oder der äußeren Fluidleitung, in dem die Wellenberge eine maximale Wellenhöhe erreichen.

Es versteht sich, dass die erfindungsgemäße Leitungsanordnung wenigstens ein Sensormittel zur Leckagedetektion aufweisen kann. Insbesondere ist das Sensormittel im Ring- oder Zwischenraum zwischen der inneren und äußeren Fluidleitung angeordnet. Es können jedoch in Axialrichtung der Leitungsanordnung auch mehrere Sensormittel im Zwischenraum vorgesehen sein, um eine Leckagedetektion im Wesentlichen über die gesamte Länge der Leitungsanordnung zu ermöglichen.

Vorzugsweise weist die innere und/oder äußere Fluidleitung an den Enden jeweils einen wellenfreien bzw. glatten Abschnitt auf, insbesondere in Form eines Glattstutzens. Dies ermöglicht eine komfortable Anbindung der Leitungsanordnung an weitere Leitungen und/oder Anschlüsse.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigen
- Fig. 1: eine perspektivische Darstellung einer schematisch dargestellten erfindungsgemäßen Leitungsanordnung,
- Fig. 2: eine Seitenansicht der in Fig. 1 dargestellten Leitungsanordnung,
- Fig. 3: eine Querschnittsansicht der in Fig. 2 dargestellten Leitungsanordnung entlang der Schnittlinie III-III aus Fig. 2,
- Fig. 4: eine perspektivische Darstellung einer weiteren Ausführungsform einer schematisch dargestellten erfindungsgemäßen Leitungsanordnung,
- Fig. 5: eine Seitenansicht der in Fig. 4 dargestellten Leitungsanordnung,
- Fig. 6: eine Querschnittsansicht der in Fig. 5 gezeigten erfindungsgemäßen Leitungsanordnung entlang der Schnittlinie VI-VI aus Fig. 5,
- Fig. 7: eine perspektivische Darstellung einer weiteren Ausführungsform einer schematisch dargestellten erfindungsgemäßen Leitungsanordnung,
- Fig. 8: eine Seitenansicht der in Fig. 7 dargestellten Leitungsanordnung,
- Fig. 9: eine Querschnittsansicht der in Fig. 8 schematisch dargestellten Leitungsanordnung entlang der Schnittlinie IX-IX aus Fig. 8,
- Fig. 10: eine perspektivische Darstellung einer weiteren Ausführungsform einer schematisch dargestellten Leitungsanordnung,
- Fig. 11: eine Seitenansicht der in Fig. 10 dargestellten Leitungsanordnung,
- Fig. 12: eine Querschnittsansicht der in Fig. 11 dargestellten Leitungsanordnung entlang der Schnittlinie XII-XII aus Fig. 11,
- Fig. 13: eine perspektivische Darstellung einer weiteren Ausführungsform einer schematisch dargestellten erfindungsgemäßen Leitungsanordnung,
- Fig. 14: eine Seitenansicht der in Fig. 13 dargestellten Leitungsanordnung,
- Fig. 15: eine Querschnittsansicht der in Fig. 14 dargestellten Leitungsanordnung entlang der Schnittlinie XV-XV aus Fig. 134
- Fig. 16: eine perspektivische Darstellung einer weiteren Ausführungsform einer schematisch dargestellten erfindungsgemäßen Leitungsanordnung,
- Fig. 17: eine Seitenansicht der in Fig. 16 dargestellten Leitungsanordnung,
- Fig. 18: eine Querschnittsansicht der in Fig. 17 dargestellten erfindungsgemäßen Leitungsanordnung entlang der Schnittlinie XVIII-XVIII aus Fig. 17,
- Fig. 19: eine perspektivische Darstellung einer weiteren Ausführungsform einer schematisch dargestellten erfindungsgemäßen Leitungsanordnung,
- Fig. 20: eine Seitenansicht der in Fig. 19 dargestellten erfindungsgemäßen Leitungsanordnung,
- Fig. 21: eine Querschnittsansicht der in Fig. 20 dargestellten Leitungsanordnung entlang der Schnittlinie XXI-XXI aus Fig. 20,
- Fig. 22: eine perspektivische Darstellung einer weiteren Ausführungsform einer schematisch dargestellten erfindungsgemäßen Leitungsanordnung,
- Fig. 23: eine Seitenansicht der in Fig. 22 dargestellten Leitungsanordnung,
- Fig. 24: eine Querschnittsansicht der in Fig. 23 schematisch dargestellten Leitungsanordnung entlang der Schnittlinie XXIV-XXIV aus Fig. 23,
- Fig. 25: eine perspektivische Darstellung einer weiteren Ausführungsform einer schematisch dargestellten erfindungsgemäßen Leitungsanordnung,
- Fig. 26: eine Seitenansicht der in Fig. 25 dargestellten Leitungsanordnung und
- Fig. 27: eine Querschnittsansicht der in Fig. 26 schematisch dargestellten Leitungsanordnung entlang der Schnittlinie XXVII-XXVII aus Fig. 26.

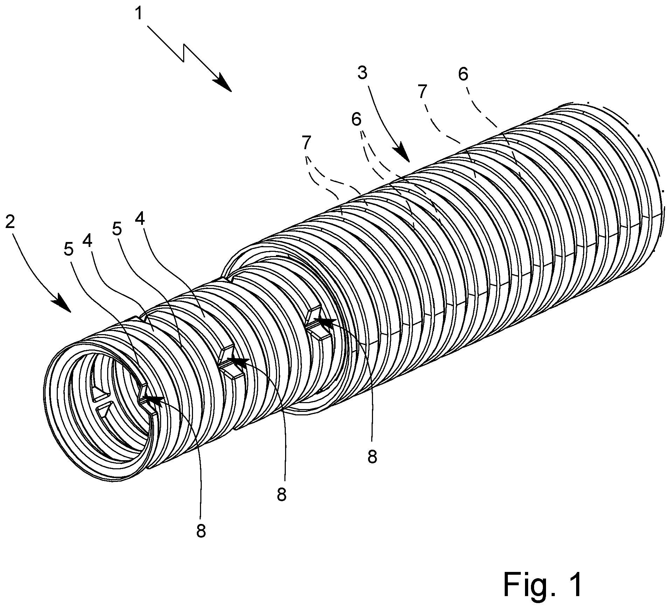

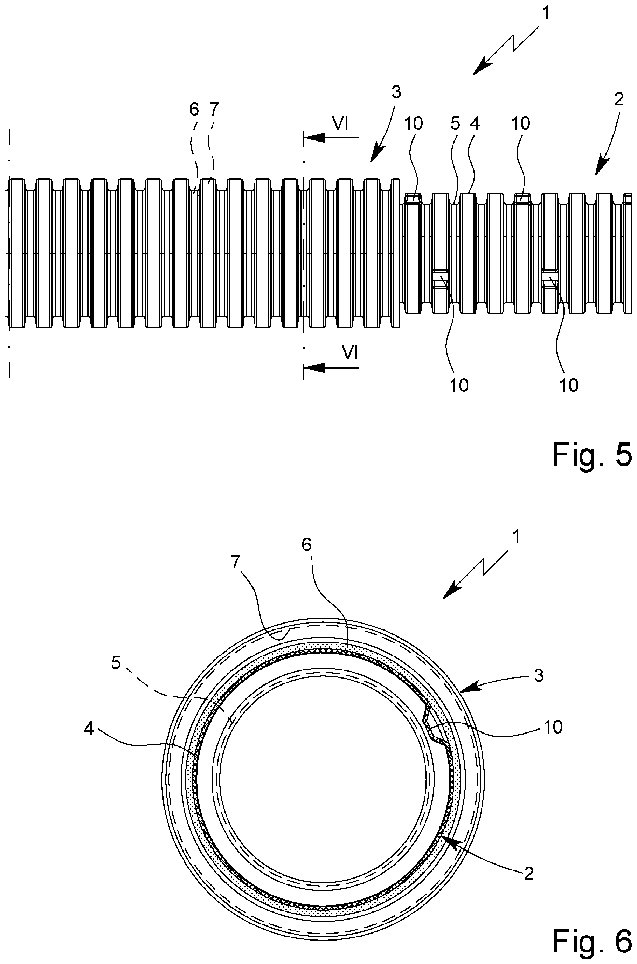

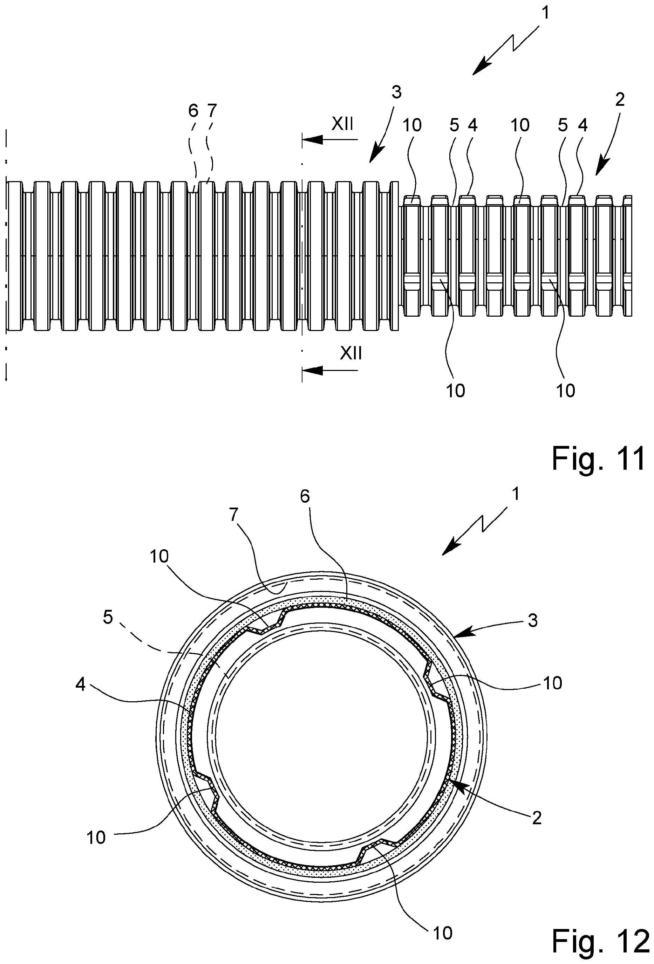

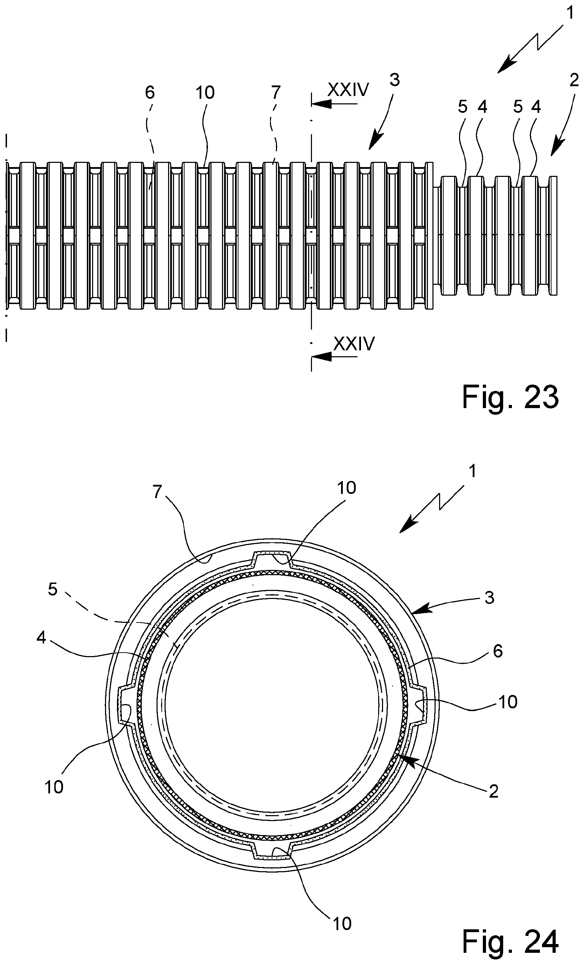

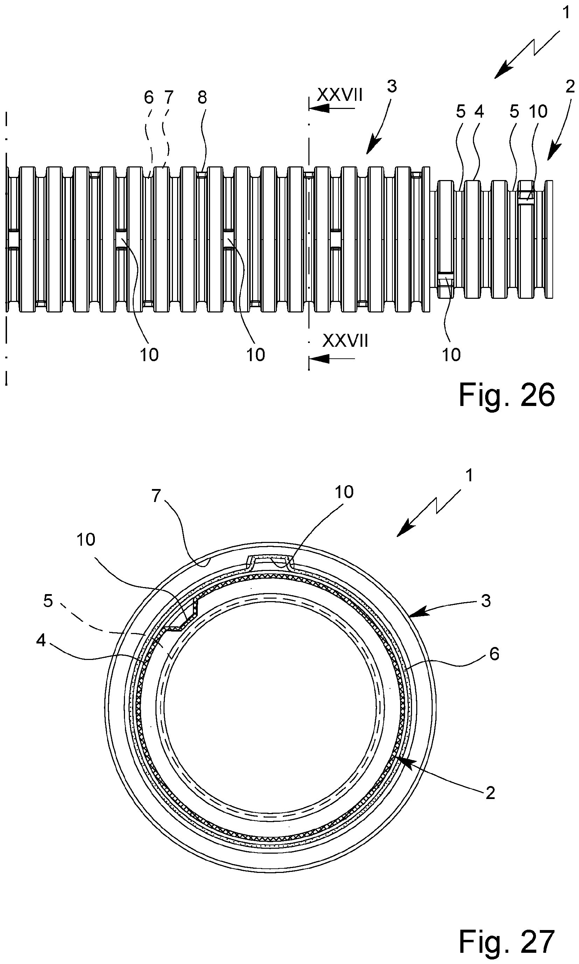

In den Figuren 1 bis 27 werden gleiche Bezugszeichen für funktions- und/oder artgleiche Merkmale verwendet, wobei entsprechende Eigenschaften und Vorteile erreicht werden, auch wenn eine wiederholte Beschreibung aus Vereinfachungsgründen weggelassen ist.

Fig. 1 zeigt in einer perspektivischen Darstellung eine erfindungsgemäße Leitungsanordnung 1. Die Leitungsanordnung 1 dient zur Zu- und/oder Ableitung von Fluiden, insbesondere Flüssigkeiten, in der Automobilindustrie und/oder im Maschinen- bzw. Anlagenbau. Insbesondere kann die erfindungsgemäße Leitungsanordnung 1 als Kraftstoffleitung, Luftführungsleitung, hydraulische Kupplungsleitung, Bremsunterdruckleitung und/oder als Scheiben- und/oder Scheinwerferreinigungsleitung eingesetzt bzw. verwendet werden und an Fluidreservoire für Kraftstoff, Luft, Hydraulikflüssigkeiten und/oder Reinigungsfluide angeschlossen bzw. anschließbar seien.

Die Leitungsanordnung 1 weist eine innere Fluidleitung 2 sowie eine äußere Fluidleitung 3 auf. Nicht dargestellt ist, dass die Leitungsanordnung 1 wenigstens einen Sensor einer Sensoreinrichtung zur Detektion von Leckageflüssigkeit aufweisen kann, die durch ein Leck oder eine ungewollte Unterbrechung der inneren Fluidleitung 2 in den Ringraum zwischen der inneren Fluidleitung 2 und der äußeren Fluidleitung 3 eintritt.

Beim gezeigten Darstellungsbeispiel sind die innere Fluidleitung 2 und die äußere Fluidleitung 3 jeweils als Wellrohr oder Wellschlauch ausgebildet.

Dementsprechend weist die innere Fluidleitung 2 ein Wellenprofil mit Wellenbergen 4 und Wellentälern 5 und die äußere Fluidleitung 3 ein Wellenprofil mit Wellenbergen 6 und Wellentälern 7 auf. Die Bezeichnung "Wellenberg" bezieht sich auf eine Blickrichtung radial nach außen mit Bezug auf die innere Fluidleitung 2 und radial nach innen mit Bezug auf die äußere Fluidleitung 3. So erstrecken sich die Wellenberge 4 der inneren Fluidleitung 2 bezogen auf eine Längs- bzw. Rotationsachse der inneren Fluidleitung 2 über eine bestimmte Wellenhöhe radial nach außen und die Wellentäler 5 sind dementsprechend zwischen den Wellenbergen 4 und radial innenliegend angeordnet. Demgegenüber erstrecken sich die Wellenberge 6 der äußeren Fluidleitung 3 bezogen auf eine Längs- bzw. Rotationsachse der äußeren Fluidleitung 3 über eine bestimmte Wellenhöhe radial nach innen und die Wellentäler 7 der äußeren Fluidleitung 3 sind diesbezüglich radial außenliegend angeordnet.

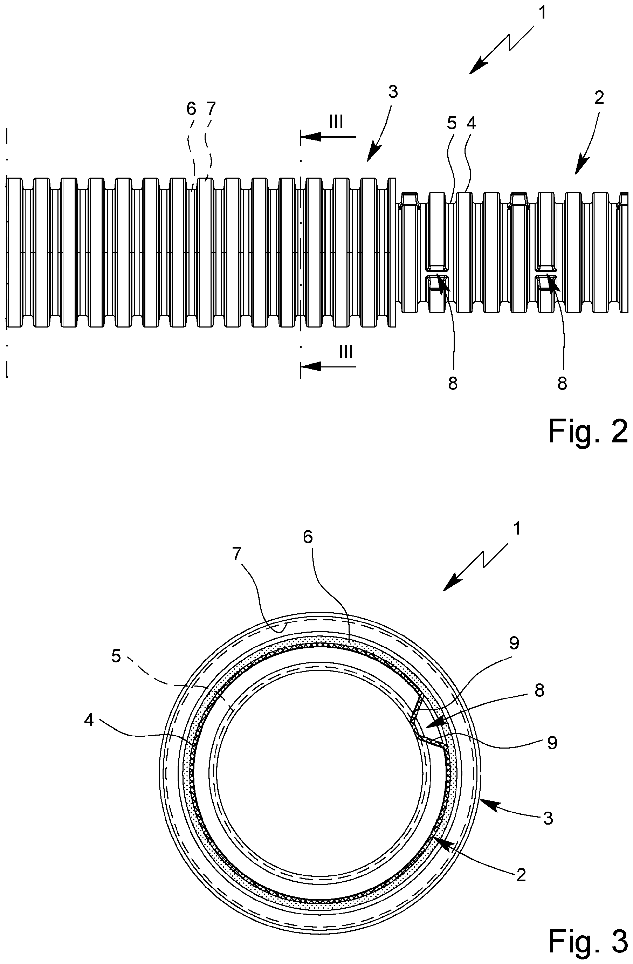

Bevorzugte Querschnittsgeometrien der Wellenberge 4, 6 und der Wellentäler 5, 7 sind in Fig. 2 dargestellt. Die Wellenprofile der inneren Fluidleitung 2 einerseits und der äußeren Fluidleitung 3 andererseits verlaufen konzentrisch.

Zur Sicherstellung eines Durchflusses zwischen der inneren Fluidleitung 2 und der äußeren Fluidleitung 3, also in dem Zwischenraum bzw. Ringraum zwischen den Fluidleitungen 2, 3, weisen einige Wellenberge 4 der inneren Fluidleitung 2 einen Bereich mit verringerter Wellenhöhe auf. Beim dargestellten Ausführungsbeispiel ist der Bereich mit verringerter Wellenhöhe als Profilunterbrechung 8 ausgebildet. Dementsprechend sind diese Wellenberge 4 der inneren Fluidleitung 2 nicht umlaufend bzw. über den Umfang geschlossen ausgebildet, sondern im Bereich der Profilunterbrechungen 8 unterbrochen. Im Bereich der Profilunterbrechung 8 gehen axial angrenzende Wellentäler 5 ineinander über, wobei die innere Fluidleitung 2 im Bereich der angrenzenden Wellentäler 5 und im Bereich der Profilunterbrechungen 8 einen gleichen Innendurchmesser aufweist. Mit anderen Worten ausgedrückt liegen die Wellentäler 5 und die Profilunterbrechungen 8 auf einem gleichen Talniveau. Insbesondere gehen die angrenzenden Wellentäler 5 über die Profilunterbrechungen 8 stufenlos ineinander über, wie aus der Darstellung gemäß Fig. 2 ersichtlich.

Durch die Profilunterbrechungen 8 wird eine in axialer Richtung wirksame fluidische Verbindung zwischen der inneren Fluidleitung 2 und der äußeren Fluidleitung 3 sichergestellt, auch wenn es zu einem Abknicken oder Abbiegen oder einer Stauchung der Leitungsanordnung 1 kommt. Damit ist gewährleistet, dass im Falle einer Leckage der inneren Fluidleitung 2 ein in den Zwischenraum zwischen den Fluidleitungen 2, 3 eintretendes Fluid in axialer Richtung der Leitungsanordnung 1 bei geringem Strömungswiderstand abfließen kann. Die bereichsweise Vergrößerung des Zwischenraums zwischen den Fluidleitungen 2, 3 im Bereich der Profilunterbrechungen 8 ist aus Fig. 3 ersichtlich.

Darüber hinaus weist bei der in den Fign. 1 bis 3 dargestellten Ausführungsform jeder nachfolgende Wellenberg 4 der inneren Fluidleitung 2 eine Profilunterbrechung 8 auf bzw. ist im Bereich der Profilunterbrechung 8 unterbrochen. Dadurch wird eine fluidischen Verbindung in axialer Richtung zumindest im Wesentlichen über die gesamte Länge der Leitungsanordnung 1 sichergestellt.

Wie insbesondere aus Fig. 2 ersichtlich, sind in axialer Richtung der inneren Fluidleitung 2 nachfolgende Profilunterbrechungen 8 in Umfangsrichtung versetzt zueinander angeordnet, beim Darstellungsbeispiel um vorzugsweise 90°.

In der Querschnittsdarstellung gemäß Fig. 3 ist verdeutlicht, dass Wellenflanken 9 der Profilunterbrechungen 8 radial nach innen aufeinander zulaufen. Beim Darstellungsbeispiel bildet sich dadurch eine im Querschnitt V-förmige Ausbildung der Profilunterbrechungen 8 aus.

Wie ebenfalls in Fig. 3 verdeutlicht, ist der maximale Außendurchmesser der inneren Fluidleitung 2, der im Wesentlichen durch die radiale Erstreckung der Wellenberge 4 bzw. die Höhe der Wellenberge 4 festgelegt ist, nur wenig kleiner als der minimale Innendurchmesser der äußeren Fluidleitung 3, der durch die Höhe der Wellenberge 6 der äußeren Fluidleitung 3 festgelegt ist. Der zwischen den Wellenbergen 4 der inneren Fluidleitung 2 und den Wellenbergen 6 der äußeren Fluidleitung 3 bestehende Abstand kann vorzugsweise weniger als 3 mm, weiter vorzugsweise weniger als 2 mm, insbesondere weniger als 1 mm, betragen.

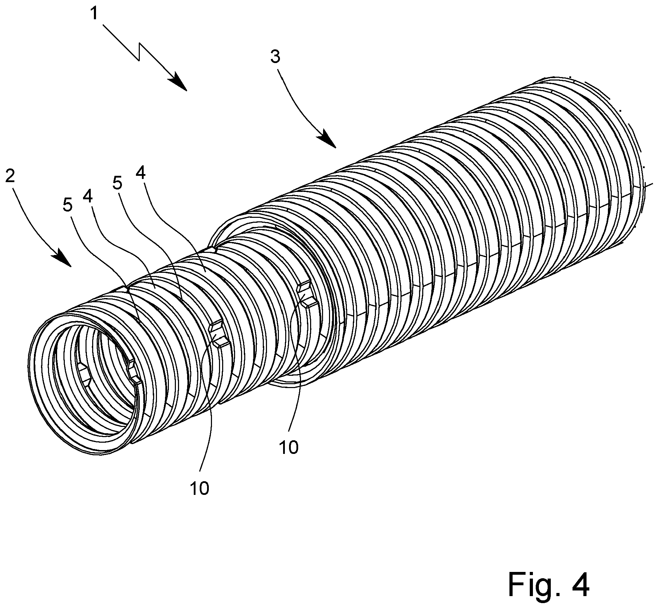

In den Fign. 4 bis 24 sind alternative Ausführungsformen von Leitungsanordnungen 1 dargestellt. Es versteht sich, dass die in Bezug auf die erste Ausführungsform beschriebenen Merkmale auch im Rahmen der nachfolgend beschriebenen Ausführungsführen realisiert sein können.

Aus den Fign. 4 bis 6 ist ersichtlich, dass die Verringerung der Wellenhöhe der Wellenberge 4 der inneren Fluidleitung 2 auch durch Profilabsenkungen 10 realisiert sein kann. Im Gegensatz zu einer Profilunterbrechung 8 weist ein Wellenberg 4 im Bereich einer Profilabsenkung 10 zwar eine verringerte Wellenhöhe auf, steht aber in radialer Richtung noch über die Talhöhe der axial angrenzenden Wellentäler 5 über. Dementsprechend ist die Wellenhöhe der Wellenberge 4 im Bereich einer Profilabsenkungen 10 geringer als die Höhe angrenzend an die Profilabsenkung 10.

Im Bereich einer oder jeder Profilabsenkung 10 weist vorzugsweise jeder Wellenberg 4 eine im Bereich von 10 bis 90 %, vorzugsweise 20 bis 80 %, insbesondere 40 bis 60 %, verringerte Höhe bzw. radiale Erstreckung gegenüber den an die Profilabsenkung 10 angrenzenden Bereichen der Wellenberge 4 auf. Insbesondere kann die Höhe des Wellenbergs 4 im Bereich einer Profilabsenkung um 10 bis 50 % reduziert sein.

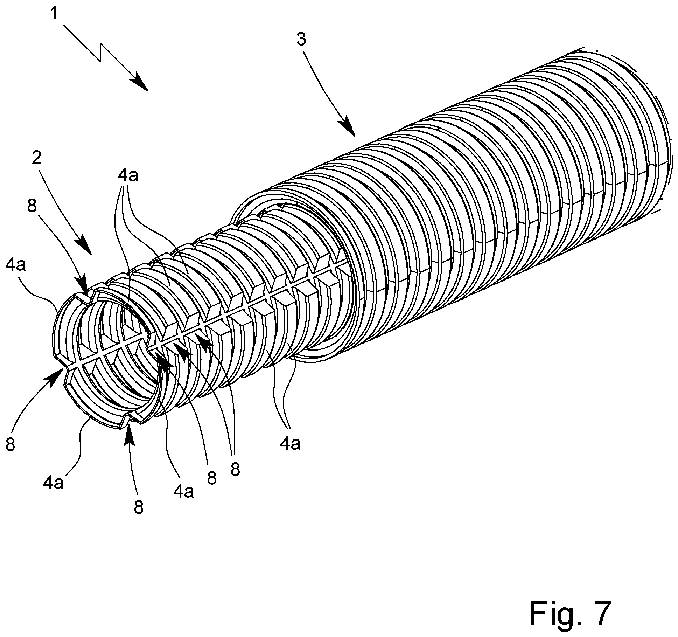

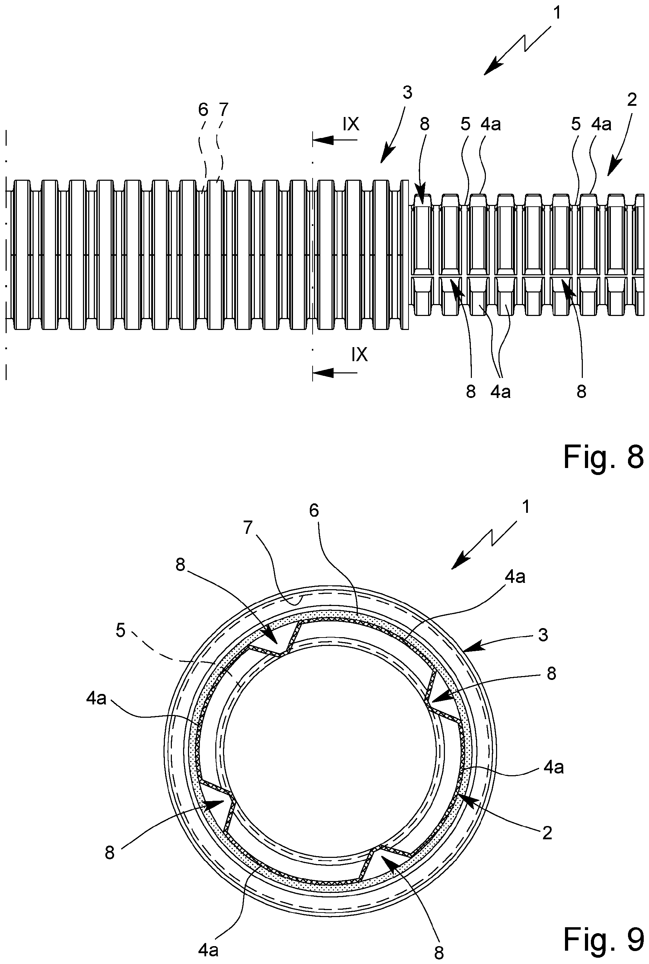

In den Fign. 7 bis 9 ist eine Ausführungsform gezeigt, bei der jeder Wellenberg 4 der inneren Fluidleitung 2 mehrfach, beim Ausführungsbeispiel vierfach, durch Profilunterbrechungen 8 unterbrochen ist. Die Profilunterbrechungen 8 sind in Umfangsrichtung gleich weit voneinander beabstandet, wie in Fig. 9 ersichtlich. Im Ergebnis werden bei dieser Ausführungsform durch die Profilunterbrechungen 8 jeweils vier in Umfangsrichtung des Wellenprofils hintereinanderliegende, gegenüber den Wellentälern 5 vorspringende, ringsegmentförmige Profilabschnitte 4a gebildet.

Ebenfalls ist dargestellt, dass in axialer Richtung der Leitungsanordnung 1 Profilunterbrechungen 8 jeweils auf einer gleichen Axiallinie liegen, also in Axialrichtung ausgefluchtet sind. Dadurch werden vier in axialer Richtung des Wellenprofils verlaufende Strömungsleitkanäle gebildet, über die Leckageflüssigkeit aus dem Zwischenbereich zwischen der inneren Fluidleitung 2 und der äußeren Fluidleitung 3 in axialer Richtung abfließen kann.

Jeweils vier ringsegmentförmige Profilabschnitte 4a, die in Umfangsrichtung hintereinanderliegend angeordnet und durch vier Profilunterbrechungen 8 voneinander beabstandet sind, bilden eine Ringstruktur des Wellenprofils, die orthogonal zur Längsachse der Leitungsanordnung 1 ausgerichtet ist. In Längsrichtung ist eine Vielzahl solcher Ringstrukturen nachfolgend angeordnet, wobei alle Profilunterbrechungen 8 jeder Ringstruktur jeweils auf einer gemeinsamen Axiallinie liegen.

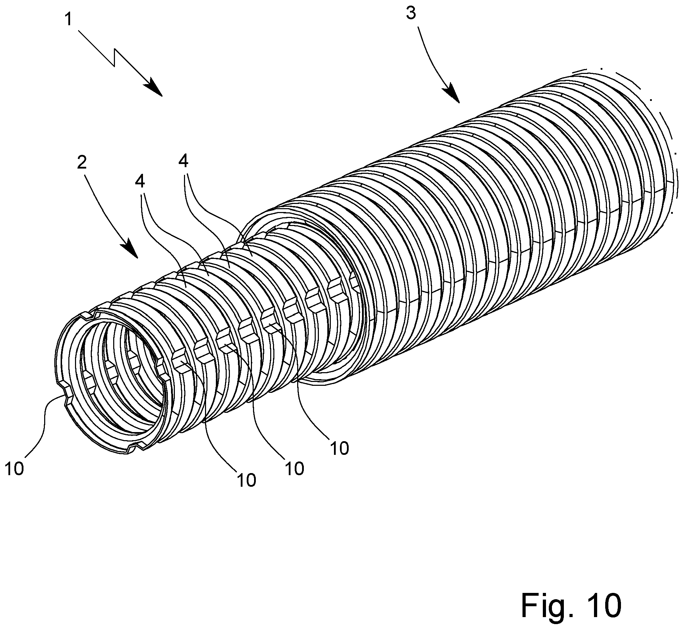

Die in den Fign. 10 bis 12 dargestellte Ausführungsform entspricht im Wesentlichen der in den Fign. 7 bis 9 dargestellten Ausführungsform, mit dem Unterschied, dass an der Stelle von Profilunterbrechungen 8 nun Profilabsenkungen 10 vorgesehen sind, wobei im Bereich einer Profilabsenkung 10 die Höhe des Wellenbergs 4 lediglich gegenüber der maximalen Höhe verringert, nicht aber auf Null reduziert ist. Eine Profilabsenkung 10 ist also dadurch gekennzeichnet, dass in Umfangsrichtung des Wellenprofils vollständig umlaufende bzw. geschlossen ausgebildete Wellenberge 4 vorgesehen sind, die im Bereich der Profilabsenkungen 10 eine geringere radiale Erstreckung bzw. geringere Wellenhöhe aufweisen als in den angrenzenden Bereichen der Wellenberge 4. Im Bereich der Profilabsenkungen 10 sinkt die Höhe der Wellenberge 4 jedoch nicht auf Talhöhe bzw. das Talniveau der zwischen den Wellenbergen 4 liegenden Wellentäler 5 ab.

Dementsprechend weist bei der in den Fign. 10 bis 12 gezeigten Ausführungsform jeder Wellenberg 4 der inneren Fluidleitung 2 mehrere, beispielsweise vier, Profilabsenkungen 10 auf, die in Umfangsrichtung gleich weit voneinander beabstandet sind. Überdies liegen die in axialer Richtung aufeinanderfolgenden Profilabsenkungen 10 der Wellenberge 4 jeweils auf einer gleichen Axiallinie, sind also in Längsrichtung zueinander ausgefluchtet.

Es ist anzumerken, dass die in den Fign. 1 bis 12 gezeigten Ausführungsformen die Verwendung einer als Standardwellrohr oder Standardwellschlauch ausgebildeten äußeren Fluidleitung 3 vorsehen, wobei die Höhe der Wellenberge 6 in Umfangsrichtung des Wellenprofils konstant ist.

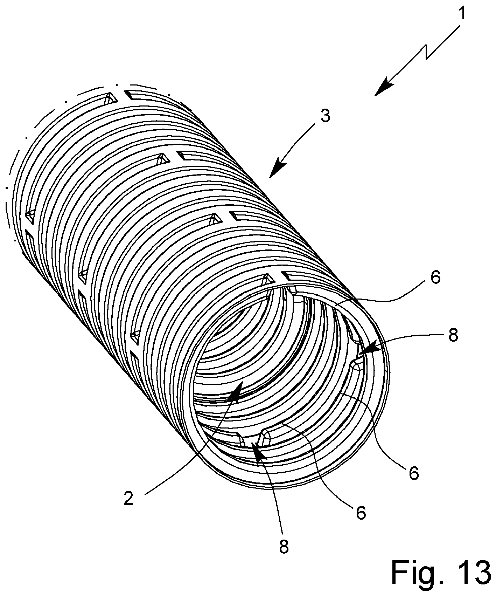

Wie in den nachfolgenden Ausführungsformen gemäß den Fign. 13 bis 24 dargestellt, ist es auch möglich, dass lediglich die äußere Fluidleitung 3 Wellenberge 6 mit abschnittsweise verringerter Wellenhöhe aufweist. Dementsprechend kann bei diesen Ausführungsformen dann die innere Fluidleitung 2 umlaufende Wellenberge 4 aufweisen, deren Wellenhöhe konstant ist. Insbesondere kann die innere Fluidleitung 2 als Standardwellrohr oder Standardwellschlauch ausgebildet sein. Grundsätzlich ist es aber auch nicht ausgeschlossen, dass die innere Fluidleitung 2 und die äußere Fluidleitung 3 jeweils Wellenberge 4 mit abschnittsweise verringerter Wellenhöhe aufweisen.

Bei der in den Fign. 13 bis 15 gezeigten Ausführungsform wird jeder Wellenberg 6 der äußeren Fluidleitung 3 durch eine Profilunterbrechung 8 unterbrochen, wobei in axialer Richtung nachfolgende Profilunterbrechungen 8 versetzt zueinander angeordnet sind, mit Bezug auf die Umfangsrichtung beispielsweise im Bereich von zumindest im Wesentlichen 90°.

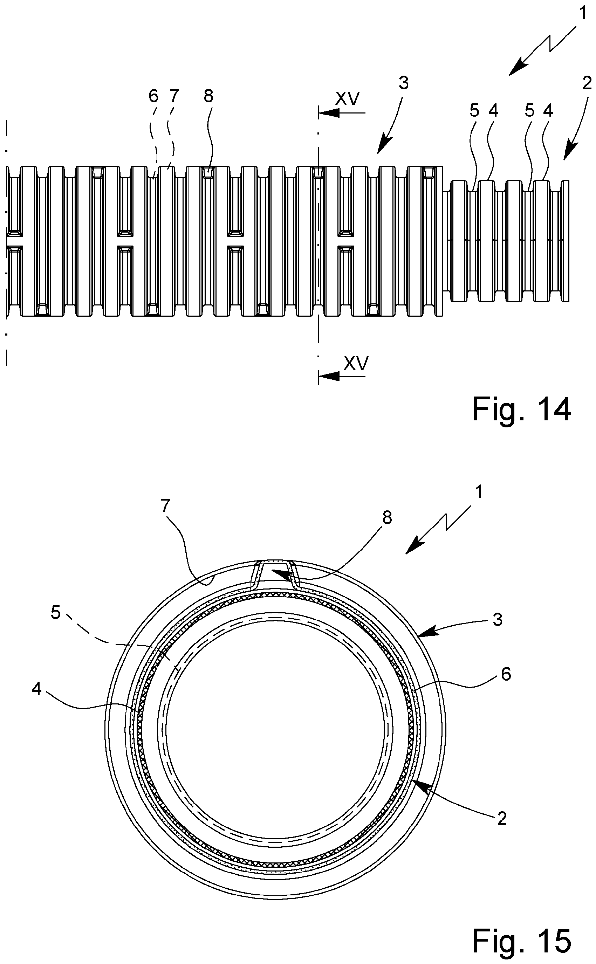

Wie aus Fig. 15 ersichtlich, ist auch hier vorgesehen, dass Profilunterbrechungen 8 stufenlos in angrenzende Wellentäler 7 übergehen bzw. die Höhe des Wellenbergs 6 im Bereich einer Profilunterbrechung 8 auf Null reduziert ist, so dass das Wellenprofil der äußeren Fluidleitung 3 im Bereich einer Profilunterbrechung 8 und im Bereich der axial angrenzenden Wellentäler 7 einen gleichen Durchmesser aufweist.

Wie insbesondere aus Fig. 15 ersichtlich, sind die Profilunterbrechungen 8 im Querschnitt im Wesentlichen U-förmig ausgebildet. Dadurch wird eine vergleichsweise breite Unterbrechung des Wellenprofils ausgebildet.

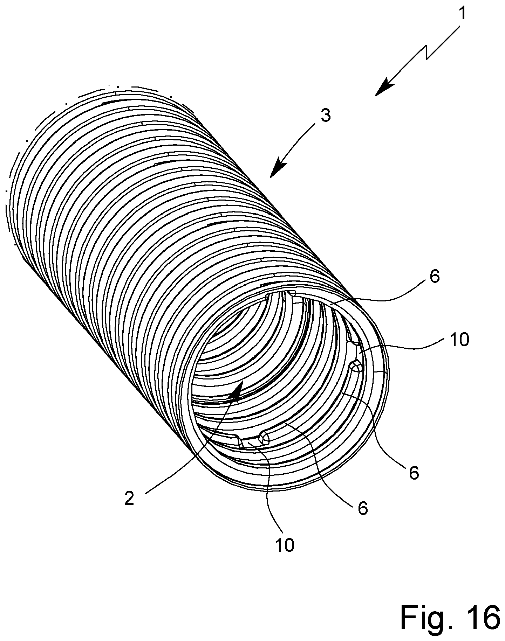

Bei der in den Fign. 16 bis 18 dargestellten Ausführungsform weisen die Wellenberge 6 der äußeren Fluidleitung 3 Profilabsenkungen 10 auf, in deren Bereichen die Wellenberge 6 eine minimale Höhe aufweisen. Gleichwohl stehen die Wellenberge 6 auch im Bereich der Profilabsenkungen 10 gegenüber den angrenzenden Talflächen über und sind nicht bis auf das Niveau der Talflächen abgesenkt.

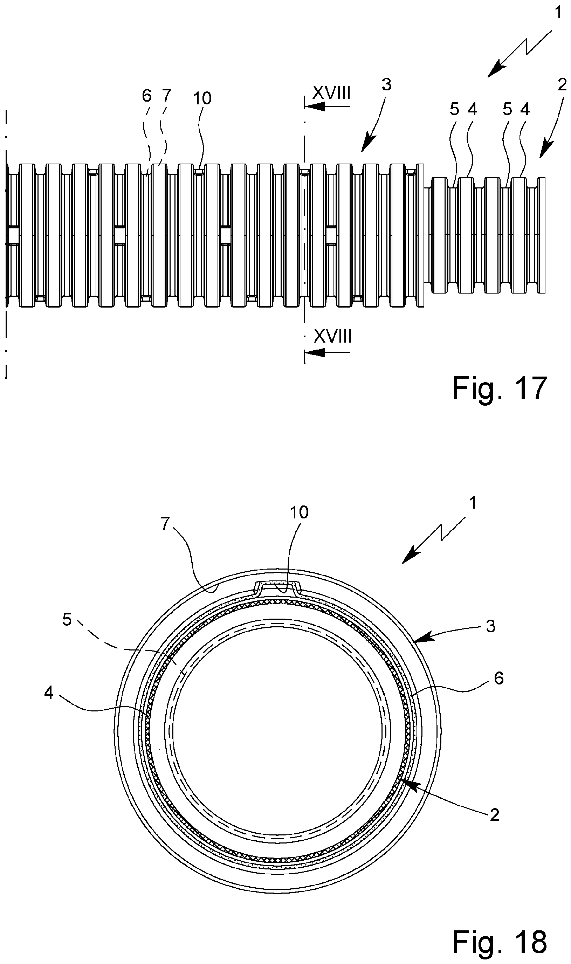

Wie insbesondere aus Fig. 17 ersichtlich, sind in axialer Richtung nachfolgende Profilabsenkungen 10 versetzt zueinander angeordnet, beim Darstellungsbeispiel mit Bezug auf die Umfangsrichtung um vorzugsweise 90°.

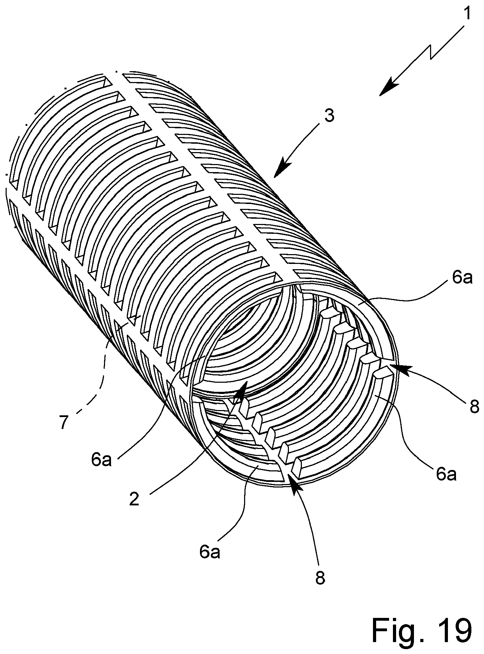

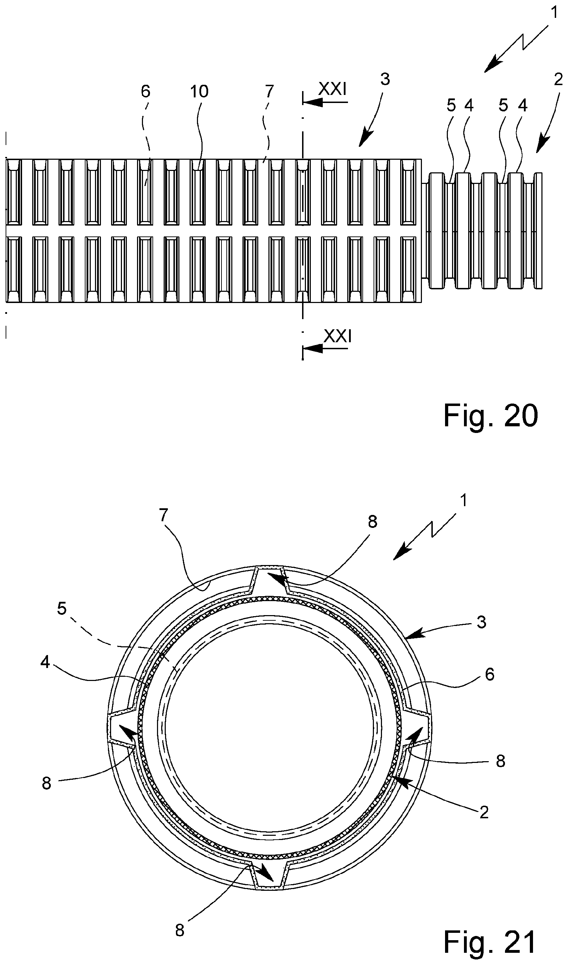

In den Fign. 19 bis 21 ist eine Ausführungsform gezeigt, bei der jeder Wellenberg 6 der äußeren Fluidleitung 3 mehrfach, beim Ausführungsbeispiel vierfach, durch Profilunterbrechungen 8 unterbrochen ist. Die Profilunterbrechungen 8 sind in Umfangsrichtung gleich weit voneinander beabstandet, wie in Fig. 21 ersichtlich. Im Ergebnis werden bei dieser Ausführungsform durch die Profilunterbrechungen 8 jeweils vier in Umfangsrichtung des Wellenprofils hintereinanderliegende, gegenüber den Wellentälern 7 vorspringende, ringsegmentförmige Profilabschnitte 6a gebildet.

In Axialrichtung der äußeren Fluidleitung 3 liegen die Profilabschnitte 6a hintereinander, wobei die Profilunterbrechung 8 auf gleichen Axiallinien liegen. Die Profilunterbrechungen 8 sind in Umfangsrichtung gleich weit voneinander beabstandet.

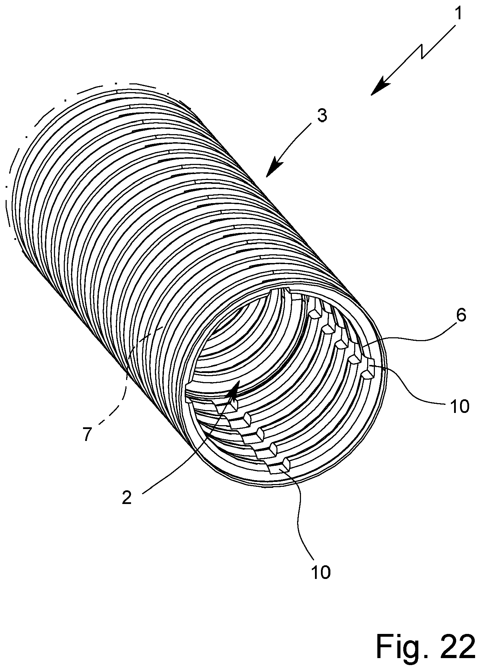

Bei der in den Fign. 22 bis 24 gezeigte Ausführungsform weist jeder Wellenberg 6 eine Mehrzahl von Profilabsenkungen 10 auf, beim Darstellungsbeispiel vier Profilabsenkungen 10. Die Profilabsenkungen 10 sind in axialer Richtung hintereinander liegend angeordnet. Im Bereich der Profilabsenkungen 10 wird eine geringere Wellenhöhe erreicht. Der Innendurchmesser der Fluidleitung 3 wird damit im Bereich der Profilabsenkungen 10 erweitert gegenüber den angrenzenden Bereichen eines Wellenbergs 6.

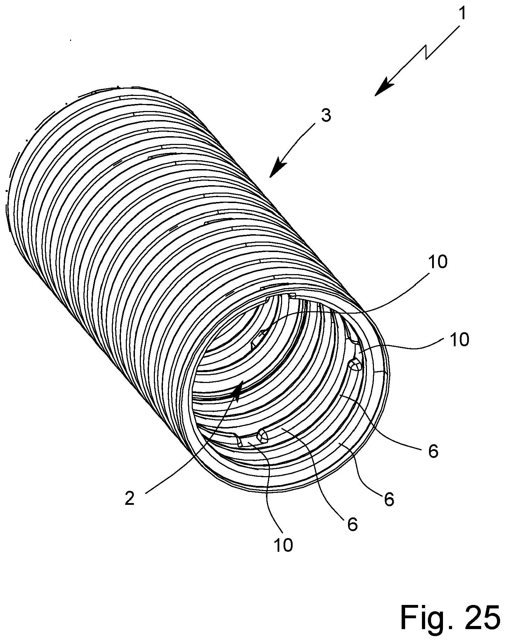

Bei der nachfolgend mit Bezug auf Fign. 25 bis 27 beschriebenen Ausführungsform weisen sowohl die innere Fluidleitung 2 als auch die äußere Fluidleitung 3 Wellenberge 4, 6 auf, die bereichsweise eine verringerte Wellenhöhe zeigen.

Beim konkreten Ausführungsbeispiel weisen die Wellenberge 4 der inneren Fluidleitung 2 Profilabsenkungen 10 auf. Auch die äußere Fluidleitung 3 weist Profilabsenkungen 10 auf, um eine verringerte Wellenhöhe zur Sicherstellung einer fluidischen Verbindung in axialer Richtung zu ermöglichen.

In axialer Richtung nachfolgende Profilabsenkungen 10 der inneren Fluidleitung 2 und der äußeren Fluidleitung 3 sind in Umfangsrichtung versetzt zueinander angeordnet, beim Darstellungsbeispiel um vorzugsweise zumindest im Wesentlichen 90°.

Es versteht sich, dass auch eine Kombination von Profilunterbrechungen 8 und Profilabsenkungen 10 realisiert sein kann, beispielsweise dahingehend, dass eine Fluidleitung 2, 3 lediglich Wellenberge 4, 6 mit Profilunterbrechungen 8 und die andere Fluidleitung 2, 3 lediglich Wellenberge 4, 6 mit Profilabsenkungen 10 aufweisen kann.

Nicht dargestellt ist, dass Wellenberge 4, 6 der äußeren und der inneren Fluidleitung 2, 3 jeweils eine Mehrzahl von Profilunterbrechungen 8 oder Profilabsenkungen 10 aufweisen können, die vorzugsweise in Umfangsrichtung gleich weit voneinander beabstandet sind. Insbesondere können in axialer Richtung nachfolgend angeordnete Profilabsenkungen 10 und/oder Profilunterbrechungen 8 in axialer Richtung ausgefluchtet sein.

Es versteht sich, dass Merkmale der zuvor beschriebenen Ausführungsformen bedarfsweise miteinander kombiniert werden können, auch wenn dies nicht im Einzelnen ausdrücklich beschrieben oder gezeigt ist.

### Bezugszeichenliste:

- 1: Leitungsanordnung
- 2: innere Fluidleitung
- 3: äußere Fluidleitung
- 4: Wellenberg
- 4a: Profilabschnitt
- 5: Wellental
- 6: Wellenberg
- 6a: Profilabschnitt
- 7: Wellental
- 8: Profilunterbrechung
- 9: Wellenflanke
- 10: Profilabsenkung

## Patentansprüche

1. Leitungsanordnung (1) mit einer inneren Fluidleitung (2) und mit einer äußeren Fluidleitung (3), insbesondere einem inneren Wellrohr oder Wellschlauch und einem äußeren Wellrohr oder Wellschlauch, wobei wenigstens eine der Fluidleitungen (2, 3) ein Wellenprofil mit Wellenbergen (4, 6) und Wellentälern (5, 7) aufweist, **dadurch gekennzeichnet, dass** zur Sicherstellung eines Durchflusses zwischen innerer Fluidleitung (2) und äußerer Fluidleitung (3) wenigstens ein Wellenberg (4, 6) einen Bereich mit verringerter Wellenhöhe aufweist.

2. Leitungsanordnung (1) nach Anspruch 1, **dadurch gekennzeichnet, dass** in axialer Richtung nachfolgende Wellenberge (4, 6) des Wellenprofils wenigstens einen Bereich mit verringerter Wellenhöhe aufweisen.

3. Leitungsanordnung (1) nach Anspruch 1 oder 2, **dadurch gekennzeichnet, dass** in axialer Richtung nachfolgende Bereiche mit verringerter Wellenhöhe auf einer gleichen axialen Linie liegen und/oder in axialer Richtung ausgefluchtet sind.

4. Leitungsanordnung (1) nach einem der vorhergehenden Ansprüche, **dadurch gekennzeichnet, dass** wenigstens ein Wellenberg (4, 6), vorzugsweise jeder Wellenberg (4, 6), der inneren Fluidleitung (2) und/oder der äußeren Fluidleitung (3) eine Mehrzahl von Bereichen mit verringerter Wellenhöhe aufweist.

5. Leitungsanordnung (1) nach einem der vorhergehenden Ansprüche, **dadurch gekennzeichnet, dass** die Mehrzahl von Bereichen mit verringerter Wellenhöhe in Umfangsrichtung voneinander gleichbeabstandet sind.

6. Leitungsanordnung (1) nach einem der vorhergehenden Ansprüche, **dadurch gekennzeichnet, dass** in axialer Richtung nachfolgende Wellenberge (4, 6) jeweils wenigstens einen Bereich mit verringerter Wellenhöhe aufweisen und dass die Bereiche mit verringerter Wellenhöhe der nachfolgenden Wellenberge (4, 6) in Umfangsrichtung versetzt zueinander angeordnet sind, vorzugsweise um 30° bis 120°, weiter vorzugsweise um 80° bis 100°, besonders bevorzugt um 90°.

7. Leitungsanordnung (1) nach einem der vorhergehenden Ansprüche, **dadurch gekennzeichnet, dass** Wellenflanken (9) eines Wellenberges (4, 6) oder mehrere Wellenberge (4, 6) geneigt zueinander angeordnet sind.

8. Leitungsanordnung (1) nach einem der vorhergehenden Ansprüche, **dadurch gekennzeichnet, dass** die innere Fluidleitung (2) und/oder die äußere Fluidleitung (3) extrudiert ist/sind.

9. Leitungsanordnung (1) nach einem der vorhergehenden Ansprüche, **dadurch gekennzeichnet, dass** die innere Fluidleitung und die äußere Fluidleitung jeweils ein Wellenprofil mit Wellenbergen (4, 6) und Wellentälern (5, 7) aufweisen, wobei die Wellenberge (4) der inneren Fluidleitung (2) und die Wellenberge (6) der äußeren Fluidleitung (3) gegenüberliegend angeordnet sind.

10. Leitungsanordnung (1) nach einem der vorhergehenden Ansprüche, **dadurch gekennzeichnet, dass** der maximale Außendurchmesser der inneren Fluidleitung (2) weniger als 3 mm, vorzugsweise weniger als 2 mm, weiter vorzugsweise weniger als 1 mm, kleiner ist als der minimale Innendurchmesser der äußeren Fluidleitung (3).

## Claims

1. Conduit arrangement (1) with an inner fluid conduit (2) and with an outer fluid conduit (3), in particular an inner corrugated tube or corrugated hose and an outer corrugated tube or corrugated hose, wherein at least one of the fluid conduits (2, 3) has a corrugated profile with corrugation crests (4, 6) and corrugation troughs (5, 7), **characterized in that**, in order to ensure a flow between the inner fluid conduit (2) and outer fluid conduit (3), at least one corrugation crest (4, 6) has a region with reduced corrugation height.

2. Conduit arrangement (1) according to claim 1, **characterized in that** in axial direction subsequent corrugation crests (4, 6) of the corrugated profile have at least one region with reduced corrugation height.

3. Conduit arrangement (1) according to claim 1 or 2, **characterized in that** in the axial direction subsequent regions with reduced corrugation height lie on a same axial line and/or are aligned in the axial direction.

4. Conduit arrangement (1) according to one of the preceding claims, **characterized in that** at least one corrugation crest (4, 6), preferably each corrugation crest (4, 6), of the inner fluid conduit (2) and/or the outer fluid conduit (3) has a plurality of regions with reduced corrugation height.

5. Conduit arrangement (1) according to one of the preceding claims, **characterized in that** the plurality of regions with reduced corrugation height are equally spaced from one another in the circumferential direction.

6. Conduit arrangement (1) according to one of the preceding claims, **characterized in that** in axial direction subsequent corrugation crests (4, 6) each have at least one region with reduced corrugation height and **in that** the regions with reduced corrugation height of the subsequent corrugation crests (4, 6) are arranged offset from one another in the circumferential direction, preferably by 30° to 120°, further preferably by 80° to 100°, particularly preferably by 90°.

7. Conduit arrangement (1) according to one of the preceding claims, **characterized in that** corrugation flanks (9) of a corrugation crest (4, 6) or multiple corrugation crests (4, 6) are arranged inclined to each other.

8. Conduit arrangement (1) according to one of the preceding claims, **characterized in that** the inner fluid conduit (2) and/or the outer fluid conduit (3) is/are extruded.

9. Conduit arrangement (1) according to one of the preceding claims, **characterized in that** the inner fluid conduit (2) and the outer fluid conduit (3) each have a corrugated profile with corrugation crests (4, 6) and corrugation troughs (5, 7), wherein the corrugation crests (4) of the inner fluid conduit (2) and the corrugation crests (6) of the outer fluid conduit (3) are arranged opposite each other.

10. Conduit arrangement (1) according to one of the preceding claims, **characterized in that** the maximum outer diameter of the inner fluid conduit (2) is less than 3 mm, preferably less than 2 mm, further preferably less than 1 mm, smaller than the minimum inner diameter of the outer fluid conduit (3).

## Revendications

1. Ensemble de conduits (1) avec un conduit de fluide intérieur (2) et un conduit de fluide extérieur (3), en particulier un tube ondulé ou un tuyau flexible ondulé intérieur et un tube ondulé ou un tuyau flexible ondulé extérieur, dans lequel au moins un des conduits de fluide (2, 3) présente un profil ondulé avec des crêtes (4, 6) et des creux (5, 7), **caractérisé en ce qu'**au moins une crête (4, 6) présente une zone avec une hauteur d'ondulation réduite pour assurer un passage de fluide entre le conduit de fluide intérieur (2) et le conduit de fluide extérieur (3).

2. Ensemble de conduits (1) selon la revendication 1, **caractérisé en ce que** des crêtes (4, 6) du profil ondulé se suivant dans une direction axiale présentent au moins une zone avec une hauteur d'ondulation réduite.

3. Ensemble de conduits (1) selon la revendication 1 ou 2, **caractérisé en ce que** des zones se suivant dans une direction axiale avec une hauteur d'ondulation réduite se situent sur une même ligne axiale et/ou sont alignées dans la direction axiale.

4. Ensemble de conduits (1) selon l'une quelconque des revendications précédentes, **caractérisé en ce qu'**au moins une crête (4, 6), de préférence chaque crête (4, 6), du conduit de fluide intérieur (2) et/ou du conduit de fluide extérieur (3) présente une multitude de zones avec une hauteur d'ondulation réduite.

5. Ensemble de conduits (1) selon l'une quelconque des revendications précédentes, **caractérisé en ce que** la multitude de zones avec une hauteur d'ondulation réduite sont équidistantes les unes par rapport aux autres dans la direction périphérique.

6. Ensemble de conduits (1) selon l'une quelconque des revendications précédentes, **caractérisé en ce que** des crêtes (4, 6) se suivant dans la direction axiale présentent respectivement au moins une zone avec une hauteur d'ondulation réduite, et que les zones avec une hauteur d'ondulation réduite des crêtes (4, 6) se suivant sont disposées de manière décalée les unes par rapport aux autres dans la direction périphérique, de préférence de 30° à 120°, par ailleurs de préférence de 80° à 100°, de manière particulièrement préférée de 90°.

7. Ensemble de conduits (1) selon l'une quelconque des revendications précédentes, **caractérisé en ce que** des flancs d'ondulation (9) d'une crête (4, 6) ou plusieurs crêtes (4, 6) sont disposés de manière inclinée les uns par rapport aux autres.

8. Ensemble de conduits (1) selon l'une quelconque des revendications précédentes, **caractérisé en ce que** le conduit de fluide intérieur (2) et/ou le conduit de fluide extérieur (3) est/sont extrudé(s).

9. Ensemble de conduits (1) selon l'une quelconque des revendications précédentes, **caractérisé en ce que** le conduit de fluide intérieur et le conduit de fluide extérieur présentent respectivement un profil ondulé avec des crêtes (4, 6) et des creux (5, 7), dans lequel les crêtes (4) du conduit de fluide intérieur (2) et les crêtes (6) du conduit de fluide extérieur (3) sont disposées de manière à se faire face.

10. Ensemble de conduits (1) selon l'une quelconque des revendications précédentes, **caractérisé en ce que** le diamètre extérieur maximal du conduit de fluide intérieur (2) est inférieur de moins de 3 mm, de préférence de moins de 2 mm, par ailleurs de préférence de moins de 1 mm au diamètre intérieur minimal du conduit de fluide extérieur (3).
